(19) Europäisches Patentamt / European Patent Office / Office européen des brevets

(11) **EP 4 180 737 B1**

(12) **EUROPEAN PATENT SPECIFICATION**

(45) Date of publication and mention
of the grant of the patent:
**17.12.2025   Bulletin 2025/51**

(21) Application number: **22790716.9**

(22) Date of filing: **28.02.2022**

(51) International Patent Classification (IPC):
**F24F 11/86** (2018.01)     **F24F 11/64** (2018.01)
**F24F 11/61** (2018.01)     **F24F 140/20** (2018.01)
**F24F 110/10** (2018.01)     **F25B 49/02** (2006.01)

(52) Cooperative Patent Classification (CPC):
**F25B 49/022;** F24F 11/64; F24F 11/86;
F24F 2110/10; F24F 2140/20; F25B 2500/08;
F25B 2600/0253; Y02B 30/70

(86) International application number:
**PCT/CN2022/078364**

(87) International publication number:
**WO 2022/222606 (27.10.2022 Gazette 2022/43)**

(54) **CONTROL METHOD AND APPARATUS FOR AIR CONDITIONING COMPRESSOR, AND AIR CONDITIONER**

STEUERUNGSVERFAHREN UND -VORRICHTUNG FÜR KLIMAANLAGENKOMPRESSOR UND KLIMAANLAGE

PROCÉDÉ ET APPAREIL DE COMMANDE POUR COMPRESSEUR DE CLIMATISATION, ET CLIMATISEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **22.04.2021   CN 202110438313**

(43) Date of publication of application:
**17.05.2023   Bulletin 2023/20**

(73) Proprietors:
• **Qingdao Haier Air Conditioner General Corp., Ltd.**
**Qingdao, Shandong 266101 (CN)**
• **Qingdao Haier Air-Conditioning Electronic Co., Ltd**
**Qingdao, Shandong 266101 (CN)**
• **Haier Smart Home Co., Ltd.**
**Qingdao, Shandong 266101 (CN)**

(72) Inventors:
• **ZHANG, Lilong**
**Qingdao, Shandong 266101 (CN)**
• **LIAN, Jianchun**
**Qingdao, Shandong 266101 (CN)**
• **YANG, Yuanxi**
**Qingdao, Shandong 266101 (CN)**
• **WANG, Wanli**
**Qingdao, Shandong 266101 (CN)**
• **NIE, Zhengwei**
**Qingdao, Shandong 266101 (CN)**
• **NIU, Chunlei**
**Qingdao, Shandong 266101 (CN)**
• **CAO, Xiu**
**Qingdao, Shandong 266101 (CN)**

(74) Representative: **dompatent Partnerschaft von Patentanwälten und Rechtsanwälten mbB Deichmannhaus am Dom Bahnhofsvorplatz 1 50667 Köln (DE)**

(56) References cited:
WO-A1-2015/029177     CN-A- 106 152 382
CN-A- 107 036 256     CN-A- 110 057 047
CN-A- 111 503 841     CN-A- 111 503 841
CN-A- 111 964 234     CN-A- 111 964 234
CN-A- 113 251 640     JP-A- 2015 113 993

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention relates to the intelligent air conditioner, for example, relates to a controlling method and a controlling device for a compressor of an air conditioner and an air conditioner.

BACKGROUND OF THE INVENTION

At present, in the heating operation of air conditioners, for example, normal heating mode, high-temperature self-cleaning mode, defrosting to heating operation mode, etc., it is necessary to increase the compressor frequency to raise the outlet air temperature to the target temperature, for example, 56°C or higher in high-temperature self-cleaning mode. At present, the increasing frequency control of the compressor generally includes an increasing frequency operation stage, a constant frequency operation stage, and a decreasing frequency operation stage to ensure that the compressor frequency is matched with the load of the refrigeration cycle system.

In actual operation, since the temperature change of the coil lags behind the frequency change of the compressor, for example, the increased temperature of the coil lags behind the increased frequency of the compressor. That is, the frequency adjustment of the compressor is not synchronized with the temperature change of the coil. Therefore, in the increasing frequency operation of the conventional control of the compressor, in order to reduce the hysteresis between the temperature change of coil and the frequency change of compressor, an inherent nodal temperature is provided to switch the compressor frequency from fast increasing to slow increasing. That is, in a case where the temperature of the inner coil is greater than the inherent nodal temperature, the compressor is controlled to operate at a lower frequency increase rate.

In the practice of the embodiment of the present disclosure, it is found that at least the following problems of the related technology: the conventional increasing frequency control of compressor machinery is inflexible and cannot realize the increasing frequency control of the compressor according to the actual situation in the control process, which easily leads to the compressor frequency being too high and not matched with the load of the system, resulting in a shutdown.

CN111964234A discloses a method and device for controlling an air conditioner compressor and an air conditioner. The method comprises the steps that current compressor working parameters are obtained when the air conditioner completes defrosting operation and enters a heating operation state; according to the first corresponding relationship between the stored compressor working parameters and an inner coil temperature, an estimated inner coil temperature matched with the current compressor working parameters is determined, wherein the first corresponding relationship is recorded before the air conditioner enters the heating operation state; and according to the estimated inner coil temperature, the operation of the compressor is controlled

CN111503841A discloses a method for controlling the sterilization of an air conditioner, the air conditioner, and a storage medium. The method for controlling sterilization of the air conditioner comprises the following steps: detecting a high-temperature sterilization command; controlling a compressor to run at a first running frequency according to a first frequency increasing speed, and controlling the compressor to maintain the first running frequency for first preset time length; acquiring real-time temperature of an indoor heat exchanger; controlling the compressor according to the real-time temperature to orderly increase the running frequency to a target running frequency of a corresponding frequency increasing period at different periods, until the real-time temperature achieves sterilization temperature, and controlling the compressor to run for preset sterilization time length according to the current target running frequency.

SUMMARY OF THE INVENTION

In order to have a basic understanding of some aspects of the disclosed embodiments a brief summary is given below. The summary is not intended to be a general comment or to identify crucial/essential constituent elements or to describe the protection scope of these embodiments but rather to serve as a preface to the detailed description that follows.

The embodiment of the present disclosure provides a controlling method and a controlling device for a compressor of an air conditioner and an air conditioner, in order to solve problems that: the conventional increasing frequency control of compressor machinery is inflexible and cannot realize the increasing frequency control of the compressor according to the actual situation in the control process, which easily leads to the compressor frequency being too high and not matched with the load of the system, resulting in a shutdown.

According to the invention as defined in claim 1, the controlling method for a compressor of an air conditioner includes:

obtaining a first actual temperature of the inner coil; according to the first actual temperature and the predetermined decreasing amplitude correction value, obtaining a first correction temperature; in a case where the first correction temperature is lower than the first predetermined temperature, controlling the compressor to operate at the first frequency increase rate; obtaining a first correction temperature' of the inner coil, and according to the first actual temperature' and the predetermined decreasing amplitude correction value, obtaining a first correction temperature'; in a case where the first correction temperature' is greater than or equal to the first predetermined temperature, obtaining a first temperature difference between the first correction temperature' and the previous first correction temperature'; in a case where the first temperature difference is greater than or equal to the first setting temperature difference, controlling the compressor to operate at a second frequency increase rate, wherein the first frequency increase rate is greater than the second frequency increase rate.

According to the invention as defined in claim 9, the controlling device includes a processor and a memory storing program instructions, wherein the processor is configured to execute the mentioned controlling method for a compressor of an air conditioner in a case where executing the program instructions.

According to the invention as defined in claim 10, the air conditioner includes the mentioned controlling device for a compressor of an air conditioner.

The controlling method, the controlling device, and the air conditioner for the compressor of the air conditioner provided by the embodiment of the disclosure can have the following technical advantages:

In the embodiment of the present disclosure, in the increasing frequency operation stage of the compressor, the temperature increased amount within the setting detection interval is provided (for example, the first temperature difference), the hysteresis degree of the temperature (the actual temperature or the correction temperature) of the inner coil is considered, and a nodal temperature (the first predetermined temperature) is set in the increasing frequency temperature range. In a case where it is lower than the nodal temperature, controlling the compressor to operate at a first frequency increase rate; in a case where it is greater than the nodal temperature, and the first temperature difference is greater than or equal to the first setting temperature difference, which shows that the fast increasing frequency operation of the compressor has accumulated a lot of heat, and the lag degree is large, at this time, the frequency increase rate of the compressor is reduced to a second frequency increase rate, which is a slow increasing frequency operation. That is, the temperature increased amount in the setting detection interval during the increasing frequency operation is regarded as the switching parameter between the fast increasing frequency operation and the slow increasing frequency operation, which reduces the hysteresis between inner coil temperature and compressor increasing frequency, avoids the compressor frequency increasing too fast and the phenomenon of compressor shutdown, and effectively solves the problem of too high compressor frequency caused by the hysteresis of the temperature change of the inner coil. On the basis, the actual temperature of the inner coil can be corrected by decreasing amplitude, the correction temperature is defined as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

The above general description and the description below are exemplary and explanatory only and are not intended to limit the present disclosure.

## BRIEF DESCRIPTION OF THE DRAWINGS

One or more embodiments are illustrated by means of the corresponding drawings, which do not constitute a limitation of the embodiments, elements having the same reference numerals in the drawings are shown as similar elements, and the drawings do not constitute a limitation of proportion, wherein:

Fig. 1 is a flow chart of a controlling method for a compressor of an air conditioner provided by an embodiment according to the present invention;

Fig. 2 is a flow chart of the controlling method for the compressor of the air conditioner provided by an other embodiment according to the present invention;

Fig. 3 is a flow chart of the controlling method for the compressor of the air conditioner provided by an other embodiment according to the present invention;

Fig. 4 is a flow chart of the controlling method for the compressor of the air conditioner provided by an other embodiment according to the present invention;

Fig. 5 is a flow chart of the controlling method for the compressor of the air conditioner provided by an other embodiment according to the present invention;

Fig. 6 is a schematic diagram of a controlling device for a compressor of an air conditioner provided by an embodiment according to the invention.

DETAILED DESCRIPTION OF THE EMBODIMENTS

In order to enable a more detailed understanding of the features and technical content of the embodiments of the present disclosure, the implementation of the embodiments of the present disclosure will be described in detail below in conjunction with the accompanying drawings, which are for illustration only and are not intended to limit the embodiments of the present disclosure. In the following technical description for convenience of explanation, several details are provided for a full understanding of the disclosed embodiments. However, one or more embodiments may still be practiced without these details. In other instances, the well-known structures and devices may simplify the disclosure in order to simplify the drawings.

The terms "first", "second" and the like in the specification and claims of embodiments of the present disclosure and the above drawings are used to distinguish similar elements and are not necessarily used to describe a particular order or priority. It should be understood that the data used in this way can be interchanged where appropriate for the embodiments of the present disclosure described herein. Furthermore, the terms "include" and "have" and any variations thereof are intended to cover a non-exclusive inclusion.

Unless otherwise illustrated, the term "a plurality of" means two or more.

In the embodiment of the present disclosure, the character "/" indicates that the front element and rear element are in an "or" relationship. For example, A/B illustrates A or B.

The term "and/or" is an association relationship that describes elements, indicating that there can be three relationships. For example, A and/or B represent relationships: A or B, or A and B.

It should be noted that the embodiments of the present disclosure and the features in the embodiments can be combined with each other without conflict.

When the air conditioner system is in heating operation, for example, normal heating mode, high-temperature self-cleaning mode (such as 56°C high temperature self-cleaning), defrosting to heating operation mode, etc., the operation of the compressor generally includes the increasing frequency operation stage, the constant frequency operation stage and the decreasing frequency operation stage to control the outlet air temperature to reach the target temperature. And each operation stage corresponds to its operating temperature range. By real-time detecting the relationship between the temperature of the inner coil and the operating temperature range, the compressor can be controlled to operate at increasing frequency, constant frequency, or decreasing frequency. The increasing frequency operation corresponds to an increasing frequency temperature range, for example, the increasing frequency temperature range is lower than the first temperature. The constant frequency operation corresponds to the constant frequency temperature range, for example, the constant frequency temperature range is greater than or equal to the first temperature and lower than a second temperature. The decreasing frequency operation corresponds to a decreasing frequency temperature range, for example, the decreasing frequency temperature range is greater than or equal to the second temperature and lower than or equal to a third temperature. In a case where the temperature of the inner coil is greater than the third temperature, the compressor is controlled to stop, and the third temperature can be defined as the shutdown protection temperature. The first temperature, the second temperature, and the third temperature can be determined according to the available practical scenarios. For example, the first temperature is 50°C to 53°C, the second temperature is generally 4°C to 7°C greater than the first temperature, and the third temperature is generally 5°C to 8°C greater than the second temperature. For example, the first temperature is 52°C, the second temperature is 57°C, and the third temperature is 63°C. In addition, in a case where the temperature of the inner coil is greater than the third temperature, the compressor is controlled to stop.

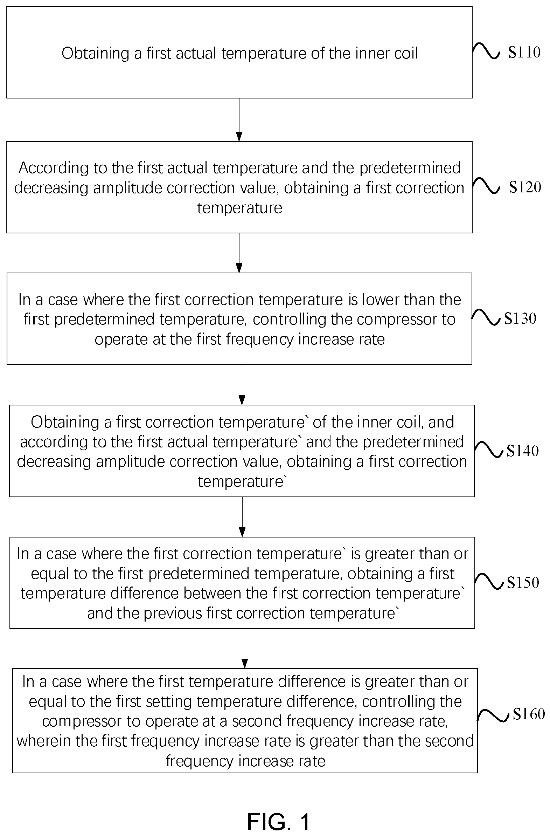

With reference to Fig. 1, the controlling method for the compressor of the air conditioner provided by the embodiment of the present disclosure, including:
S110, obtaining a first actual temperature of the inner coil disposed in the air conditioner.

The first actual temperature of the inner coil can be detected by a temperature sensor disposed in the middle of the inner coil.

S120, according to the first actual temperature and the predetermined decreasing amplitude correction value, obtaining a first correction temperature.

In step S120, the predetermined decreasing amplitude correction value is a definite value. The predetermined decreasing amplitude correction value is provided to correct the decrease of the first actual temperature. That is, the predetermined decreasing amplitude correction value subtracted from the first actual temperature is the first correction temperature, so that the first correction temperature is lower than the first actual temperature, in which the compressor can be prevented from entering the decreasing frequency temperature range prematurely by determining according to the first actual temperature of the inner coil, from frequently entering the frequency cycle of decreasing-increasing, and from reducing the stability of the air conditioner, further from affecting the user experience.

Optionally, the predetermined decreasing amplitude correction value is 3°C to 7°C. Optionally, the predetermined decreasing amplitude correction values can be 3°C, 4°C, 5°C, 6°C and 7°C or any other value.

S130, in a case where the first correction temperature is lower than the first predetermined temperature, controlling the compressor to operate at the first frequency increase rate.

The first predetermined temperature is lower than the upper limiting temperature of the increasing frequency temperature range (or the lower limiting temperature of the constant frequency temperature range), which is, the first temperature. Optionally, the first predetermined temperature is lower than the upper limiting temperature of the increasing frequency temperature range by 12°C to 25°C. Optionally, the first predetermined temperature is lower than the upper limiting temperature of the increasing frequency temperature range by 15°C to 25°C. Optionally, the first predetermined temperature is lower than the upper limiting temperature of the increasing frequency temperature range by 20°C to 23°C. Optionally, the first predetermined temperature is lower than the upper limiting temperature of the increasing frequency temperature range by 22°C. For example, in a case where the upper limiting temperature of the increasing frequency temperature range (or the lower limiting temperature of the constant frequency temperature range) is 52°C, the first predetermined temperature is 27°C to 40°C. Optionally, the first predetermined temperature is 27°C to 37°C. Optionally, the first predetermined temperature is 29°C to 32°C. Optionally, the first predetermined temperature is 30°C. The first predetermined temperature can also be any other value in the range of 27°C to 40°C, which is not limited.

S140, obtaining a first correction temperature' of the inner coil, and according to the first actual temperature' and the predetermined decreasing amplitude correction value, obtaining a first correction temperature'.

Herein, the predetermined decreasing amplitude correction value is the same as the predetermined decreasing amplitude correction value in step S120, and will not be described here.

S150, in a case where the first correction temperature' is greater than or equal to the first predetermined temperature, obtaining a first temperature difference between the first correction temperature' and the previous first correction temperature'.

In step S150, since the first correction temperature' is obtained by correcting the first actual temperature' of the inner coil by the decreasing amplitude of the predetermined value, the first temperature difference is also the difference between the first actual temperature' and the previous first actual temperature'. In the embodiment, the first actual temperature' of the inner coil is detected by a setting detection interval, and the detection interval is not limited. Optionally, the detection interval is a setting value, for example, the 40s, 30s, 20s, or 10s.

The first temperature difference is the difference between the first actual temperature' at two adjacent detection moments, and the previous first actual temperature' is the first actual temperature ' detected at the previous detection moment at which the detection moment in the adjacent two detection moments is preceded. Optionally, the first temperature difference is obtained by the previous first actual temperature' subtracted from the current first actual temperature'.

S160, in a case where the first temperature difference is greater than or equal to the first setting temperature difference, controlling the compressor to operate at a second frequency increase rate, wherein the first frequency increase rate is greater than the second frequency increase rate.

The first setting temperature difference is a predetermined value, which can be determined according to the available practical scenarios. Optionally, the first setting temperature difference is 0.4°C to 1.2°C. Optionally, the first setting temperature difference is 0.5°C. Of course, the first setting temperature difference can also be other values, such as 0.6°C, 0.8°C, 1°C, 1.1°C, and 1.2°C.

In the embodiment of the present disclosure, the first frequency increase rate is 0.5 to 1.5 Hz/s, and the second frequency increase rate is lower than the first frequency increase rate. Optionally, the first frequency increase rate is 0.8 to 1.2 Hz/s. Optionally, the first frequency increase rate is 1Hz/s. The first frequency increase rate can be any value in the range of 0.5 to 1.5 Hz/s.

Optionally, the second frequency increase rate is 0.01 to 0.5Hz/s. Optionally, the second frequency increase rate is 0.05 to 0.2Hz/s. Optionally, the second frequency increase rate is 0.08 to 0.15Hz/s. Optionally, the second frequency increase rate is 0.1Hz/s. The second frequency increase rate can be any value in the range of 0.01 to 0.5 Hz/s.

In the embodiment of the present disclosure, a temperature increased amount (for example, a first temperature difference) within a setting detection interval is provided in the increasing frequency operation stage of the compressor, and the lag degree of the temperature (actual temperature or correction temperature) of the inner coil is considered. At the same time, a nodal temperature (first predetermined temperature) is provided in the increasing frequency temperature range. In a case where it is lower than the nodal temperature, controlling the compressor to operate at the first frequency increase rate; in a case where it is greater than the nodal temperature, and the first temperature difference is greater than or equal to the first setting temperature difference, which shows that the fast increasing frequency operation of the compressor has accumulated a lot of heat, and the lag degree is large, at this time, the frequency increase rate of the compressor is reduced to the second frequency increase rate, which is a slow increasing frequency operation. That is, the temperature increased amount in the setting detection interval during the increasing frequency operation is regarded as the switching parameter between the fast increasing frequency operation and the slow increasing frequency operation, which reduces the hysteresis between inner coil temperature and compressor increasing frequency, avoids the compressor frequency increasing too fast and the phenomenon of compressor shutdown, and effectively solves the problem of too high compressor frequency caused by the hysteresis of the temperature change of the inner coil. On the basis, the actual temperature of the inner coil can be corrected by decreasing amplitude, the correction temperature is defined as the temperature parameter to control the operation of the compressor, which can avoid the compressor from frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

On the basis of providing the temperature increased amount within the setting detection interval, it breaks the rhythm of the conventional compressor frequency control, and re-determines the nodal temperature (the first predetermined temperature), which can further reduce the lag degree between the temperature change of the inner coil and the frequency change of the compressor, and avoid the compressor shutdown caused by the compressor frequency increasing too fast.

The controlling method of the embodiment of the present disclosure is adapted to the control of the compressor in the heating operation of the air conditioner system, for example, the normal heating mode, the high-temperature self-cleaning mode (e.g., the high-temperature self-cleaning at 56°C), the defrosting to the heating operation mode, etc. It can effectively reduce the shutdown frequency of the compressor in the increasing temperature operation stage, and even avoid the compressor crash.

In some embodiments, the controlling method further includes: obtaining a first current increasing frequency operation duration of the compressor and a current first correction temperature'; in a case where the first current increasing frequency operation duration is longer than or equal to the first setting increasing frequency operation duration, and the current first correction temperature' is lower than the fifth predetermined temperature, controlling the compressor to operate at a second frequency increase rate; wherein, the fifth predetermined temperature is greater than the first predetermined temperature. In the embodiment, the first current increasing frequency operation duration is timed by starting the increasing frequency operation of the compressor. In a case where the first correction temperature' is still lower than the fifth predetermined temperature after the first setting increasing frequency operation duration, the temperature lag of the inner coil is serious, and the fast increasing frequency operation is switched to the slow increasing frequency operation, so as to slow down the temperature lag of the inner coil and avoid the compressor frequency increasing too fast and the phenomenon of compressor shutdown.

In the embodiment, the fifth predetermined temperature is greater than the first predetermined temperature, but still within the increasing frequency temperature range. Optionally, the fifth predetermined temperature is 45°C to 50°C. Optionally, the fifth predetermined temperature is 47°C. The first setting increasing frequency operation duration can be determined according to the available practical scenarios. For example, the first setting increasing frequency operation duration is 1 to 5min, optionally 1min, 2min, 3min, 5min, etc.

In step S160 of the embodiment of the present disclosure, it can be understood that during the operation of the compressor at the second frequency increase rate, the actual temperature of the inner coil and the correction temperature are continuously obtained and corrected by decreasing amplitude. In a case where the correction temperature meets the constant frequency operation condition, the increasing frequency operation is exited and the constant frequency operation is entered. The constant frequency operation condition is determined according to actual application scenarios.

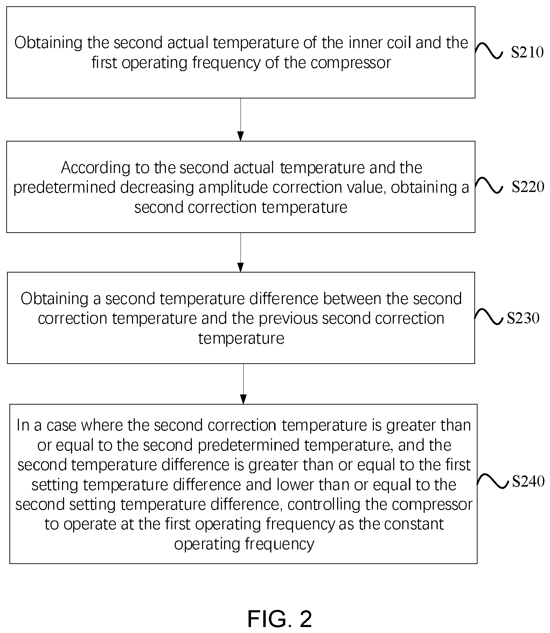

In some embodiments, as shown in Fig. 2, after controlling the compressor to operate at the second frequency increase rate, the controlling method further includes:

S210, obtaining the second actual temperature of the inner coil and the first operating frequency of the compressor.

The first actual temperature of the inner coil can be detected by a temperature sensor disposed in the middle of the inner coil. The first operating frequency of the compressor can be obtained by the conventional method.

S220, according to the second actual temperature and the predetermined decreasing amplitude correction value, obtaining a second correction temperature.

Herein, the predetermined decreasing amplitude correction value is the same as the predetermined decreasing amplitude correction value in step S120, and will not be described here.

S230, obtaining a second temperature difference between the second correction temperature and the previous second correction temperature.

The illustration of the second temperature difference in step S230 is the same as the illustration of the first temperature difference in step S150, and will not be described here.

S240, in a case where the second correction temperature is greater than or equal to the second predetermined temperature, and the second temperature difference is greater than or equal to the first setting temperature difference and lower than or equal to the second setting temperature difference, controlling the compressor to operate at the first operating frequency as the constant operating frequency.

Herein, the second correction temperature is obtained during the slow increasing frequency operation stage of the compressor, which is greater than the first correction temperature', so the second predetermined temperature is greater than the first predetermined temperature. Optionally, the second predetermined temperature is 10°C to15°C greater than the first predetermined temperature.

For example, the first predetermined temperature is 27°C to 40°C, and the second predetermined temperature is 37°C to 55°C.

Optionally, the second predetermined temperature is 39°C to 48°C. Optionally, the second predetermined temperature is 45°C.

The first setting temperature difference is the same as the first setting temperature difference in step S160. The second setting temperature difference is greater than the first setting temperature difference, and optionally, the second setting temperature difference is greater than the first setting temperature difference by 0.4°C to 0.8°C. Optionally, the second setting temperature difference is greater than the first setting temperature difference by 0.4°C to 0.6°C. Optionally, the second setting temperature difference is greater than the first setting temperature difference by 0.5°C.

Optionally, the first setting temperature difference is 0.4°C to 1.2°C, and the second setting temperature difference is 0.8°C to 2°C.

Optionally, the second setting temperature difference is 0.9°C to 1.5°C. Optionally, the second setting temperature difference is 1°C. Of course, the second setting temperature difference can also be other values, such as 0.9°C, 1.2°C, 1.5°C, 1.8°C, 2°C, etc.

In the embodiment of the present disclosure, at that slow increasing frequency stage of the compressor at the second frequency increase rate, another nodal temperature (the second predetermined temperature) is added. In a case where the correction temperature of the inner coil is greater than the second predetermined temperature, and the temperature increased amount within the setting detection interval (for example, the second temperature difference) is within the range of [first setting temperature difference, second setting temperature difference], it indicates that the hysteresis degree of the temperature of the inner coil has been alleviated. At this time, the compressor is controlled to exit the slow increasing frequency operation and to operate at constant frequency to further reduce the hysteresis degree between the temperature of the inner coil and the frequency increase of the compressor.

Optionally, in a case where the second correction temperature is greater than the third predetermined temperature, and the second temperature difference is greater than the second setting temperature difference, controlling the compressor to operate at a first frequency decrease rate; wherein, the third predetermined temperature is greater than the second predetermined temperature. In the embodiment, in a case where the temperature lag degree of the inner coil is serious, the compressor is controlled to operate at the first frequency decrease rate.

In the embodiment, the third predetermined temperature is greater than the second predetermined temperature. Optionally, the third predetermined temperature is 3°C to 8°C greater than the second predetermined temperature. Optionally, the third predetermined temperature is 4°C to 6°C greater than the second predetermined temperature. Optionally, the third predetermined temperature is greater than the second predetermined temperature by 5°C.

Optionally, the third predetermined temperature is 44°C to 53°C. Optionally, the third predetermined temperature is 50°C.

Optionally, the first frequency decrease rate is 0.01 to 1.5Hz/s. Optionally, the first frequency decrease rate is 0.05 to 1.4Hz/s. Optionally, the first frequency decrease rate is 0.08 to 1.2Hz/s. Optionally, the first frequency decrease rate is 0.1 to 1Hz/s.

In the embodiment, optionally, after controlling the compressor to operate at the first frequency decrease rate, the controlling method further includes: obtaining a third actual temperature of the inner coil; according to the third actual temperature and the predetermined decreasing amplitude correction value, obtaining a third correction temperature; obtaining a third temperature difference between the third correction temperature and the previous third correction temperature; in a case where the third correction temperature is greater than the fourth predetermined temperature, and the third temperature difference is greater than the second predetermined temperature difference, controlling the compressor to operate at a second frequency decrease rate; wherein the fourth predetermined temperature is greater than the third predetermined temperature, and the second frequency decrease rate is greater than the first frequency decrease rate. In the embodiment, in a case where the temperature lag degree of the inner coil is serious, controlling the compressor to operate at a second frequency decrease rate.

In the embodiment, the fourth predetermined temperature is greater than the third predetermined temperature, and optionally, the fourth predetermined temperature is 8°C to 15°C greater than the third predetermined temperature. Optionally, the fourth predetermined temperature is 8°C to 12°C greater than the third predetermined temperature. Optionally, the fourth predetermined temperature is greater than the third predetermined temperature by 10°C.

Optionally, the fourth predetermined temperature is 58°C to 65°C. Optionally, the fourth predetermined temperature is 58°C to 62°C. Optionally, the fourth predetermined temperature is 60°C.

In the embodiment, the second frequency decrease rate needs to be greater than the first frequency decrease rate. Optionally, the second frequency decrease rate is 0.8 to 1.5Hz/s. Optionally, the second frequency decrease rate is 0.9 to 1.2Hz/s. Optionally, the second frequency decrease rate is 1Hz/s.

Optionally, the first frequency increase rate is 0.01 to 0.5Hz/s. Optionally, the first frequency increase rate is 0.05 to 0.2Hz/s. Optionally, the first frequency increase rate is 0.08 to 0.15Hz/s. Optionally, the first frequency increase rate is 0.1Hz/s.

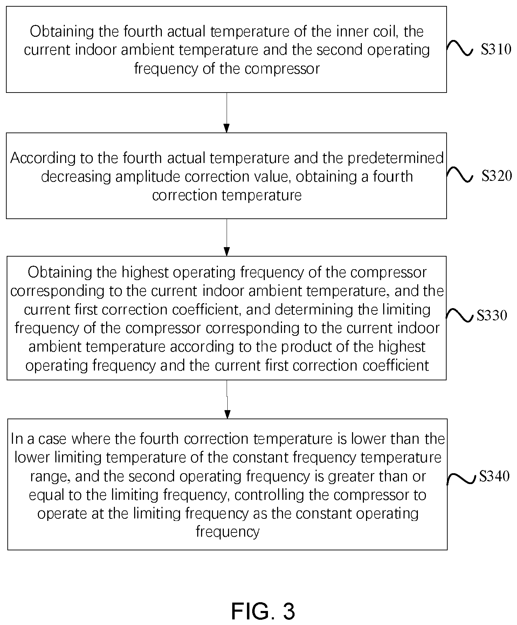

In other embodiments, as shown in Fig. 3, after controlling the compressor to operate at the second frequency increase rate, the controlling method further includes:
S310, obtaining the fourth actual temperature of the inner coil, the current indoor ambient temperature, and the second operating frequency of the compressor.

The fourth actual temperature of the inner coil can be detected by a temperature sensor arranged in the middle of the inner coil, and the current indoor ambient temperature can be detected by a temperature sensor arranged indoors.

S320, according to the fourth actual temperature and the predetermined decreasing amplitude correction value, obtaining a fourth correction temperature.

Herein, the predetermined decreasing amplitude correction value is the same as the predetermined decreasing amplitude correction value in step S120, and will not be described here.

S330, obtaining the highest operating frequency of the compressor corresponding to the current indoor ambient temperature, and the current first correction coefficient, and determining the limiting frequency of the compressor corresponding to the current indoor ambient temperature according to the product of the highest operating frequency and the current first correction coefficient.

In step S330, respectively reading a predetermined first correction coefficient and the highest operating frequency corresponding to the current indoor ambient temperature, from a first correspondence between the indoor ambient temperature and the highest operating frequency of the compressor and a second correspondence between the indoor ambient temperature and the first correction coefficient.

The first correspondence between the indoor ambient temperature and the highest operating frequency of the compressor can be obtained by detecting the highest frequency of the amplifier heating of the compressor under different indoor ambient temperatures, and the highest frequency of the amplifier heating is the highest operating frequency of the compressor corresponding to the indoor ambient temperature.

The higher the indoor ambient temperature, the lower the highest frequency of the compressor allowed by the air conditioner system, so the increasing space of the frequency of the compressor is small. Therefore, the first correction coefficient is configured to correct the decreasing amplitude of the highest operating frequency of the compressor, so as to avoid the fast increasing frequency of the compressor in the frequency increase operation stage, so as to prevent the frequency of the compressor from increasing to the highest operating frequency or even exceeding the highest operating frequency and avoid the compressor from the shutdown.

Optionally, obtaining the current first correction coefficient corresponding to the current indoor ambient temperature, includes: determining the current first correction coefficient corresponding to the current indoor ambient temperature according to the negative correlation relationship between the indoor ambient temperature and the first correction coefficient; wherein, the first correction coefficient is in a range of greater than or equal to 0.4 and lower than 1. That is, the higher the indoor ambient temperature, the smaller the first correction coefficient is, so that the limiting frequency of the compressor is smaller determined according to the product of the highest operating frequency and the current first correction coefficient, so that the frequency increasing range of the compressor is reduced, thereby ensuring that the operating frequency of the compressor is within an allowable range and avoiding shutdown.

Optionally, the predetermined corresponding relationship between the indoor ambient temperature and the first correction coefficient, includes a plurality of continuous indoor ambient temperature ranges, and each indoor ambient temperature range corresponds to one first correction coefficient. In the embodiment, the indoor ambient temperature is located at one of a plurality of indoor ambient temperature ranges by setting nodal temperatures according to the conventional range of the indoor ambient temperature. There is no limit to the amount of indoor ambient temperature ranges, which can be 2, 3, 4, or more.

Optionally, the amount of indoor ambient temperature ranges is 3.

Optionally, the first indoor ambient temperature range is lower than 17°C. The second indoor temperature range is from greater than or equal to 17°C to lower than 30°C. The third indoor ambient temperature range is greater than or equal to 30°C.

Optionally, the variation of the first correction coefficient is a synchronous linear or an asynchronous polygonal with the variation of the indoor ambient temperature.

Optionally, the first indoor ambient temperature range is lower than 17°C, and the first correction coefficient is 0.9. The second indoor temperature range is from greater than or equal to 17°C to lower than 30°C, and the first correction coefficient is 0.8. The third indoor ambient temperature range is greater than or equal to 30°C, and the first correction coefficient is 0.5. In the embodiment, the variation of the first correction coefficient is in an asynchronous polygonal pattern with the variation of the indoor ambient temperature.

Optionally, obtaining the current first correction coefficient corresponding to the current indoor ambient temperature, includes: obtaining the current indoor ambient temperature and determining the temperature range where the current indoor environment is located; according to the corresponding relationship between the temperature range and the first correction coefficient, determining the current first correction coefficient corresponding to the current indoor environment.

S340, in a case where the fourth correction temperature is lower than the lower limiting temperature of the constant frequency temperature range, and the second operating frequency is greater than or equal to the limiting frequency, controlling the compressor to operate at the limiting frequency as the constant operating frequency.

In step S340, in a case where the fourth correction temperature is lower than the lower limiting temperature of the constant frequency temperature, which is, within the increasing frequency temperature range, if the operating frequency of the compressor is increased to the limiting frequency, controlling the compressor to exit the increasing frequency operation and enter the constant frequency operation, so as to avoid the problem that the increasing frequency of the compressor is too high caused by the hysteresis of the temperature change of the inner coil and causes the compressor to the shutdown. The lower limiting temperature of the constant frequency temperature range (or the upper limiting temperature of the increasing frequency temperature range) can be determined according to the available practical scenarios, such as the first temperature mentioned above. For example, 52°C.

In the process of realizing the embodiment of the present disclosure, it is found that under different indoor ambient temperatures, the temperature increase rate of the inner coil is different, and then the highest operating frequency of the compressor in the increasing frequency operation stage is different. And under different indoor ambient temperatures, the highest operating frequency of the compressor is also different. Therefore, by providing the indoor ambient temperature, the highest operating frequency of the compressor is corrected, and the corrected highest operating frequency is taken as the limiting frequency, and the limiting frequency is taken as the operating frequency in the constant frequency operation stage, which effectively solves the problem of too high compressor frequency caused by the hysteresis of the temperature change of the inner coil. And while positively controlling to operate at a lower frequency as the constant operating frequency, the actual temperature of the inner coil can be corrected by decreasing amplitude, the correction temperature is defined as the temperature parameter to control the operation of the compressor, which can avoid the compressor frequently entering the frequency cycle of increasing-constant-decreasing, improve the stability of the compressor, avoid the fluctuation of the air outlet temperature of the air conditioner caused by the frequent fluctuation of the compressor frequency, ensure the stability of ambient temperature and improve the user experience.

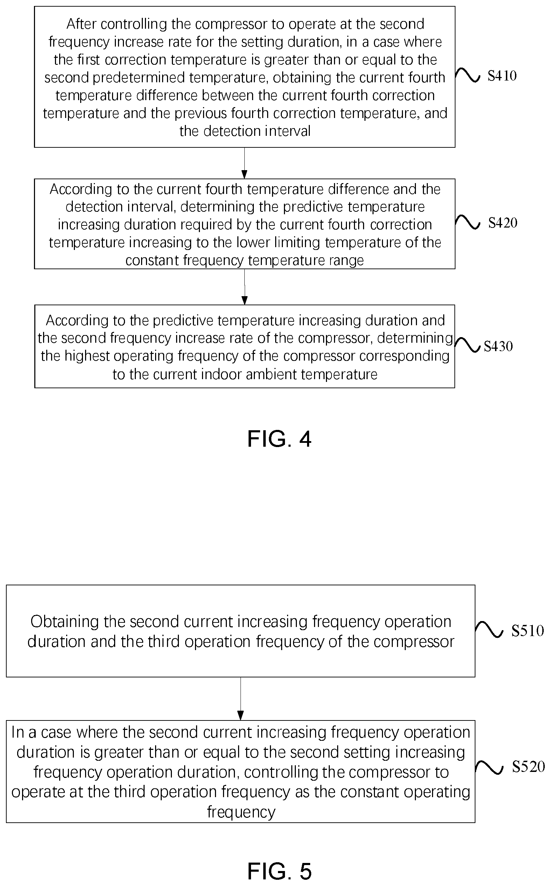

In step S330 of the embodiment of the present disclosure, the highest operating frequency of the compressor can be obtained by the following methods besides the predetermined first correspondence, as shown in Fig. 4. Obtaining the highest operating frequency of the compressor corresponding to the current indoor ambient temperature, includes:

S410, after controlling the compressor to operate at the second frequency increase rate for the setting duration, obtaining a current fourth temperature difference between the current fourth correction temperature and the previous fourth correction temperature, and a detection interval of the correction temperature of the inner coil.

The setting duration is not limited, for example, the setting duration is 10s, 15s, 20s, etc.

S420, according to the current fourth temperature difference and the detection interval, determining the predictive temperature increasing duration required by the current fourth correction temperature increasing to the lower limiting temperature of the constant frequency temperature range.

Optionally, according to the ratio of the current fourth temperature difference and the detection interval, determining the current temperature increasing rate, and according to the ratio of the increased temperature of the current fourth correction temperature increasing to the lower limiting temperature of the constant frequency temperature range and the current temperature increasing rate, determining the predictive temperature increasing duration.

In the embodiment, the increased temperature is divided by the current temperature increasing rate to obtain the time required by the current temperature increasing to the lower limiting temperature of the constant frequency temperature range at the current temperature increasing rate, which is, the predictive temperature increasing duration. The predictive temperature increasing duration t is obtained by the following equation (1):

$$t = \Delta T/v \qquad\qquad (1)$$

where $\Delta T$ is the increased temperature, v is the current temperature increasing rate; $v = \Delta T'/\Delta t$, where $\Delta T'$ is the current temperature difference, and $\Delta t$ is the detection interval.

Optionally, according to the current fourth temperature difference value and the detection interval, determining the predictive temperature increasing duration required by the current fourth correction temperature increasing to the lower limiting temperature of the constant frequency temperature range, includes: according to the ratio of the current temperature difference and the detection interval, determine the current temperature increasing rate; according to the ratio of the increased temperature of the current fourth correction temperature to the lower limiting temperature of the constant frequency temperature range and the current temperature increasing rate, determining the initial predictive temperature increasing duration; according to the detection interval and the initial predictive temperature increasing duration (the ratio of the initial predictive temperature increasing duration to the detection interval), obtaining the predictive detection times; obtaining a current second correction coefficient corresponding to the current indoor ambient temperature; according to the detection interval, the second correction coefficient and the predictive detection times, determining the predictive temperature increasing duration. In the embodiment, the initial predictive temperature increasing duration is obtained based on the current temperature increasing rate. In the subsequent temperature increasing process, because of the hysteresis of the actual temperature of the inner coil and the influence of the frequency increase rate of the compressor, the temperature increasing rate will increase to a certain extent. Therefore, the second correction coefficient is provided to correct the detection interval, so as to obtain a more accurate predictive temperature increasing duration, and then the predictive highest operating power is more accurate.

The higher the indoor ambient temperature, the actual temperature of the inner coil increases rapidly at the later stage of the increasing frequency operation. That is, with the increasing frequency operation, the temperature increasing duration required by the actual temperature of the inner coil to increase with the current temperature difference is shorter. Therefore, based on the detection interval required by the current temperature difference, the second correction coefficient is configured to correct the detection interval.

Optionally, the predictive temperature increasing duration t is obtained by the following equation (2):

$$t = \Delta t \cdot \left(1 + \sum_{i=1}^{n-1}(1-\alpha)^i\right) \qquad (2)$$

where $\Delta t$ is the detection interval; $\alpha$ is the second correction coefficient, which is greater than 0 and lower than or equal to 0.1; n is the detection times, n = [t°/$\Delta t$], where t° is calculated by equation (1).

Optionally, obtaining the current second correction coefficient corresponding to the current indoor ambient temperature, includes: according to the positive correlation relationship between the indoor ambient temperature and the second correction coefficient, determining the current second correction coefficient corresponding to the current indoor ambient temperature; wherein, the second correction coefficient is in a range from greater than 0 to lower than or equal to 0.1. That is, the higher the indoor ambient temperature, the larger the second correction coefficient, so that the corrected temperature increasing duration (the time required by the increased temperature of the current temperature difference value at the actual temperature of the inner coil) is shorter, and the obtained predictive temperature increasing duration is more accurate.

Optionally, the predetermined corresponding relationship between the indoor ambient temperature and the second correction coefficient includes a plurality of continuous indoor ambient temperature ranges, and each indoor ambient temperature range corresponds to one second correction coefficient. In the embodiment, the indoor ambient temperature is located at one of a plurality of indoor ambient temperature ranges by setting nodal temperatures according to the conventional range of the indoor ambient temperature. There is no limit to the amount of indoor ambient temperature ranges, which can be 2, 3, 4, or more.

Optionally, the amount of indoor ambient temperature ranges is 3.

Optionally, the first indoor ambient temperature range is lower than 17°C; The second indoor temperature range is greater than or equal to 17°C and lower than 30°C; The third indoor ambient temperature range is greater than or equal to 30°C.

Optionally, the variation of the second correction coefficient is in a synchronous linear or an asynchronous polygonal with the variation of the indoor ambient temperature.

Optionally, the first indoor ambient temperature range is lower than 17°C, and the second correction coefficient is 0.01; The second indoor temperature range is greater than or equal to 17°C and lower than 30°C, and the second correction coefficient is 0.05; The third indoor ambient temperature range is greater than or equal to 30°C, and the second correction coefficient is 0.08. In the embodiment, the variation of the second correction coefficient changes in an asynchronous polygonal pattern with the variation of the indoor ambient temperature.

S430, according to the predictive temperature increasing duration and the second frequency increase rate of the compressor, determining the highest operating frequency of the compressor corresponding to the current indoor ambient temperature.

Optionally, obtaining a predictive increased frequency of the compressor, according to the product of the predictive temperature increasing duration and the second frequency increasing rate of the compressor. And adding the predictive increased frequency to the current operating frequency of the compressor is the predictive highest operating frequency of the compressor. The current operating frequency of the compressor may be obtained at the same time as the fourth correction value obtained in step S410.

In the embodiment, in the slow increasing frequency operation stage of the compressor at the second frequency increase rate, the highest operating frequency is estimated by utilizing the detection interval between the fourth correction temperature obtained in real-time and the actual temperature of the inner coil in the previous detection, and the operating frequency of the compressor, so that the obtained highest operating frequency of the compressor is more accurate.

That is, in the current indoor environment, the highest operating frequency of the compressor can be obtained from the predetermined first corresponding relationship, or the highest operating frequency can be estimated by the real-time correction temperature change of the inner coil and the operating frequency of the compressor during the increasing frequency operation.

In other embodiments, as shown in Fig. 5, after controlling the compressor to operate at the second frequency increase rate, the controlling method further includes:

S510, the second current increasing frequency operation duration, and the third operation frequency of the compressor.

Here, the second current increasing frequency operation duration is obtained by a timer.

S520, in a case where the second current increasing frequency operation duration is greater than or equal to the second setting increasing frequency operation duration, controlling the compressor to operate at the third operation frequency as the constant operating frequency.

The second setting increasing frequency operation duration can be determined according to the available practical scenarios. For example, the second setting increasing frequency operation duration is 1-5min, optionally, 1min, 2min, 3min, 5min, etc.

In the embodiment of the present disclosure, after the compressor is controlled to operate at a slow increasing frequency, the operation duration is taken as the switching condition, and after a certain operation duration is met, the increasing frequency operation is exited and the constant frequency operation is entered.

In step S240, step S340 and step S520 of the embodiment of the present disclosure, it can be understood that during the constant frequency operation of the control compressor, the actual temperature of the inner coil is continuously obtained and the correction temperature is obtained by decreasing correction. In a case where the correction temperature is greater than or equal to the lower limiting temperature of the frequency decrease temperature range, the constant frequency operation is exited and the frequency decrease operation is entered.

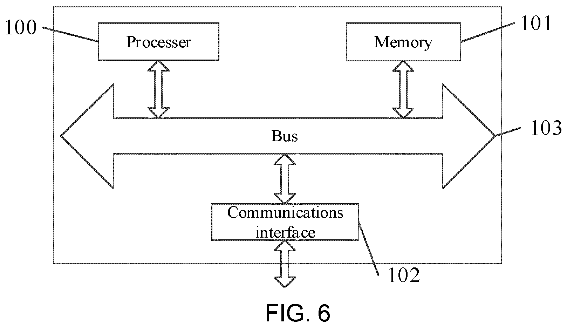

As shown in Fig. 6, the embodiment of the present disclosure provides a controlling device for a compressor of an air conditioner, which includes a processor 100 and a memory 101. Optionally the device may also include a communication interface 102 and a bus 103. The processor 100, the communication interface 102, and the memory 101 are communicated with each other through the bus 103. The communication interface 102 may be configured for information transmission. The processor 100 may invoke logic instructions in the memory 101 to execute the controlling method for the compressor of the air conditioner in the above-described embodiment.

Further, the logic instructions in the memory 101 described above may be realized in the form of software functional units and may be stored in a computer-readable storage medium when sold or used as a separate product.

As a computer-readable storage medium, the memory 101 may be configured to store software programs, and computer executable programs, such as program instructions/modules corresponding to the methods in embodiments of the present disclosure. The processor 100 executes the function application and data processing by running the program instructions/modules stored in the memory 101 that is to implement the controlling method for the compressor of the air conditioner in the above-described embodiment.

The memory 101 may include a stored program area and a stored data area wherein the stored program area may store an operating system and an application program required for at least one function. The storage data area may store data created according to the use of the terminal device. In addition, the memory 101 may include a high-speed random access memory and may also include a non-volatile memory.

The embodiment of the present disclosure provides an air conditioner including the controlling device for a compressor of an air conditioner.

The embodiments of the present disclosure provide a computer-readable storage medium storing computer-executable instructions configured to execute the above-described controlling method for a compressor of an air conditioner.

The embodiments of the present disclosure provide a computer program product including a computer program stored on a computer-readable storage medium, the computer program including program instructions that, when executed by a computer, cause the computer to execute the above-described controlling method for a compressor of an air conditioner.

The computer-readable storage medium may be a transient computer-readable storage medium or a non-transient computer-readable storage medium.

The technical proposal of the embodiment of the present disclosure can be embodied in the form of a software product, The computer software product is stored in a storage medium and includes one or more instructions for causing a computer device (which may be a personal computer, server, or network device, etc.) to perform all or part of the steps of the method described in the embodiment of the present disclosure. The mentioned storage medium may be a non-transient storage medium, including a U disk, a mobile hard disk, a Read-Only Memory (ROM), a Random Access Memory (RAM), a magnetic disk or an optical disk, and other media capable of storing program codes or maybe a transient storage medium.

The above description and drawings sufficiently illustrate embodiments of the present disclosure to enable to practice by those skilled in the art. Other embodiments may include structural logical electrical procedural and other modifications. Embodiments represent only possible variations. Unless explicitly required, individual parts and functions are optional, and the order of operation can vary. Portions and features of some embodiments may be included in or in place of portions and features of other embodiments. Furthermore, the terms used in the present disclosure are used only to describe embodiments and are not used to limit the claims. As used in the embodiments and the description of the claims, the singular forms of "a", "an" and "the" are intended to include the plural forms as well, unless the context clearly indicates. Similarly, the term "and/or" as used in this application means encompassing one or more associated lists of any and all possible combinations. Additionally, when used in this application, the term "comprise" and its variants "comprises" and/or "comprising", etc. refer to the presence of stated features, totals, steps, operations, elements, and/or components, but do not exclude the presence or addition of one or more other features, totals, steps, operations, elements, components, and/or groupings of these. In the absence of further limitations, an element defined by the phrase "includes an ..." does not preclude the existence of another identical element in the process, method, or device in which the element is included. Herein each embodiment may be highlighted as being different from the other embodiments and the same similar parts between the various embodiments may be referred to with respect to each other. For the method, product, etc. disclosed by the embodiment, if it corresponds to the method portion disclosed by the embodiment, reference can be made to the description of the method portion where relevant.

Those skilled in the art will appreciate that the various example units and algorithm steps described in connection with the embodiments disclosed herein can be implemented in electronic hardware or a combination of computer software and electronic hardware. Whether these functions are performed in hardware or software can depend on the specific application and design constraints of the technical solution. The skilled artisan may use different methods for each particular application to implement the described functionality but such implementation should not be considered outside the scope of the disclosed embodiments. It will be apparent to the skilled person that for convenience and conciseness of description, the specific operating processes of the above-described systems, devices, and units may be referred to the corresponding processes in the mentioned method embodiments and will not be repeated herein.

In the embodiments disclosed herein, the disclosed methods, and products (including but not limited to devices, devices, etc.) may be implemented in other ways. For example, the above-described embodiment of the device is only schematic, for example, the division of the unit may be only a logical function division, and in practice, there may be another division mode, for example, multiple units or components may be combined or integrated into another system, or some features may be ignored or not performed. In addition, the coupling or direct coupling or communication connection between each other shown or discussed may be indirect coupling or communication connection through some interface, device, or unit, and may be electrical, mechanical, or another form. The elements illustrated as separate elements may or may not be physically separated, and the elements displayed as elements may or may not be physical elements, i.e. may be located in one place or may be distributed over a plurality of network elements. Some or all of the units can be selected according to actual needs to realize the embodiment. In addition, each functional unit in the embodiment of the present disclosure may be integrated into one processing unit, each unit may exist physically alone, or two or more units may be integrated into one unit.

The flowcharts and block diagrams in the accompanying drawings illustrate the architecture functionality and operation of possible implementations of systems methods and computer program products according to embodiments of the present disclosure. In this regard, each block in a flow chart or block diagram may represent a module, program segment, or part of code containing one or more executable instructions for performing a specified logical function. In some alternative implementations, the functions indicated in the boxes may also occur in a different order than those indicated in the drawings. For example, two successive boxes can actually be executed substantially in parallel, or they can sometimes be executed in reverse order, depending on the functionality involved. In the description corresponding to the flowcharts and block diagrams in the drawings, the operations or steps corresponding to different blocks may also occur in a different order than that disclosed in the description, and sometimes there is no specific order between the different operations or steps. For example, two successive operations or steps can actually be performed substantially in parallel, or they can sometimes be performed in reverse order, depending on the functionality involved. Each block in the block diagram and/or flow chart, and a combination of the blocks in the block diagram and/or flow chart, may be implemented in a dedicated hardware-based system that performs a specified function or action or may be implemented in a combination of dedicated hardware and computer instructions.

## Claims

1.    A controlling method for a compressor of an air conditioner, comprising:

obtaining (S110) a first actual temperature of an inner coil disposed in the air conditioner;

according to the first actual temperature and a predetermined decreasing amplitude correction value, obtaining (S120) a first correction temperature;
in case where the first correction temperature is lower than a first predetermined temperature, controlling (S130) the compressor to operate at a first frequency increase rate;
obtaining (S140) a first actual temperature' of the inner coil;
according to the first actual temperature' and the predetermined decreasing amplitude correction value, obtaining (S150) a first correction temperature';
in case where the first correction temperature' is greater than or equal to the first predetermined temperature, obtaining a first temperature difference between the first correction temperature' and the previous first correction temperature';
in case where the first temperature difference is greater than or equal to a first setting temperature difference, controlling (S160) the compressor to operate at a second frequency increase rate, wherein the first frequency increase rate is greater than the second frequency increase rate.

2. The controlling method according to claim 1,
after controlling the compressor to operate at the second frequency increase rate, further comprising:

obtaining (S210) a second actual temperature of the inner coil and a first operating frequency of the compressor;
according to the second actual temperature and the predetermined decreasing amplitude correction value, obtaining (S220) a second correction temperature;
obtaining (S230) a second temperature difference between the second correction temperature and the previous second correction temperature;
in case where the second correction temperature is greater than or equal to a second predetermined temperature, and the second temperature difference is greater than or equal to the first setting temperature difference and lower than or equal to a second setting temperature difference, controlling (S240) the compressor to operate at the first operating frequency as a constant operating frequency;
in case where the second correction temperature is greater than a third predetermined temperature, and the second temperature difference is greater than a second predetermined temperature difference, controlling the compressor to operate at a first frequency decrease rate; wherein the third predetermined temperature is greater than the second predetermined temperature.

3. The controlling method according to claim 2,
after controlling the compressor to operate at the first frequency increase rate, further comprising:

obtaining a third actual temperature of the inner coil;
according to the third actual temperature and the predetermined decreasing amplitude correction value, obtaining a third correction temperature;
obtaining a third temperature difference between the third correction temperature and the previous third correction temperature;
in case where the third correction temperature is greater than a fourth predetermined temperature, and the third temperature difference is greater than the second predetermined temperature difference, controlling the compressor to operate at a second frequency decrease rate; wherein the fourth predetermined temperature is greater than the third predetermined temperature, and the second frequency decrease rate is greater than the first frequency decrease rate.

4. The controlling method according to claim 1,
after controlling the compressor to operate at the second frequency increase rate, further comprising:

obtaining (S310) a fourth actual temperature of the inner coil, a current indoor ambient temperature, and a second operating frequency of the compressor;
according to the fourth actual temperature and the predetermined decreasing amplitude correction value, obtaining (S320) a fourth correction temperature;
obtaining (S330) a highest operating frequency of the compressor corresponding to the current indoor ambient temperature, and a current first correction coefficient, and determining a limiting frequency of the compressor corresponding to the current indoor ambient temperature according to a product of the highest operating frequency and the current first correction coefficient;
in case where the fourth correction temperature is lower than a lower limiting temperature of a constant frequency temperature range, and the second operating frequency is greater than or equal to the limiting frequency, controlling (S340) the compressor to operate at the limiting frequency as a constant operating frequency.

5. The controlling method according to claim 4, wherein
   obtaining the highest operating frequency of the compressor corresponding to the current indoor ambient temperature, includes:

   after controlling the compressor to operate at the second frequency increase rate for a setting duration, obtaining (S410) a current fourth temperature difference between a current fourth correction temperature and the previous fourth correction temperature, and a detection interval of the correction temperature of the inner coil;
   according to the current fourth temperature difference and the detection interval, determining (S420) a predictive temperature increasing duration required by the current fourth correction temperature increasing to the lower limiting temperature of the constant frequency temperature range;
   according to the predictive temperature increasing duration and the second frequency increase rate of the compressor, determining (S430) the highest operating frequency of the compressor corresponding to the current indoor ambient temperature.

6. The controlling method according to claim 5, wherein
   according to the current fourth temperature difference and the detection interval, determining the predictive temperature increasing duration required by the current fourth correction temperature increasing to the lower limiting temperature of the constant frequency temperature range, includes:

   according to a ratio of the current fourth temperature difference and the detection interval, determining a current temperature increasing rate;
   according to a radio of an increased temperature of the current fourth correction temperature increasing to the lower limiting temperature of the constant frequency temperature range and the current temperature increasing rate, determining the predictive temperature increasing duration;
   obtaining a current second correction coefficient corresponding to the current indoor ambient temperature;
   obtaining a detection interval between the current third correction temperature and the previous third correction temperature;
   obtaining a predictive detection times according to the detection interval and the predictive temperature increasing duration;
   according to the detection interval, the second correction coefficient and the predictive detection times, obtaining the predictive temperature increasing duration.

7. The controlling method according to claim 1,
   after controlling the compressor to operate at the second frequency increase rate, further comprising:

   obtaining (S510) a second current increasing frequency operation duration and a third operation frequency of the compressor;
   in case where the second current increasing frequency operation duration is greater than or equal to a second setting increasing frequency operation duration, controlling (S520) the compressor to operate at the third operation frequency as the constant operating frequency.

8. The controlling method according to any one of claims 1 to 7,
   further comprising:

   obtaining a first current increasing frequency operation duration of the compressor and a current first correction temperature';
   in case where the first current increasing frequency operation duration is longer than or equal to the first setting increasing frequency operation duration, and the current first correction temperature' is lower than a fifth predetermined temperature, controlling the compressor to operate at the second frequency increase rate;
   wherein the fifth predetermined temperature is greater than the first predetermined temperature.

9. A controlling device for a compressor of an air conditioner, comprising a processor and a memory storing program instructions, wherein
   the processor is configured to execute the controlling method for the compressor of the air conditioner according to any one of claims 1 to 8 when executing the program instructions.

**10.** An air conditioner, , comprising:

the controlling device for the compressor of the air conditioner according to claim 9.

**Patentansprüche**

**1.** Steuerungsverfahren für einen Kompressor einer Klimaanlage, das umfasst:

Erfassen (S110) einer ersten Ist-Temperatur einer in der Klimaanlage angeordneten Innenspule;

gemäß der ersten Ist-Temperatur und einem vorbestimmten Korrekturwert einer abnehmenden Amplitude, Erfassen (S120) einer ersten Korrekturtemperatur;

in dem Fall, dass die erste Korrekturtemperatur niedriger als eine erste vorbestimmte Temperatur ist, Steuern (S130) des Kompressors, so dass dieser mit einer ersten Frequenzanstiegsrate arbeitet;

Erfassen (S140) einer ersten Ist-Temperatur' der Innenspule;

gemäß der ersten Ist-Temperatur' und dem vorbestimmten Korrekturwert der abnehmenden Amplitude, Erfassen (S150) einer ersten Korrekturtemperatur' ;

in dem Fall, dass die erste Korrekturtemperatur' größer als oder gleich der ersten vorbestimmten Temperatur ist, Erfassen einer ersten Temperaturdifferenz zwischen der ersten Korrekturtemperatur' und der vorherigen ersten Korrekturtemperatur' ;

in dem Fall, dass die erste Korrekturdifferenz größer als oder gleich einer ersten Einstelltemperaturdifferenz ist, Steuern (S160) des Kompressors, so dass dieser mit einer zweiten Frequenzanstiegsrate arbeitet, wobei die erste Frequenzanstiegsrate größer ist als die zweite Frequenzanstiegsrate.

**2.** Steuerungsverfahren nach Anspruch 1, das nach dem Steuern des Kompressors, so dass dieser mit der zweiten Frequenzanstiegsrate arbeitet, ferner umfasst:

Erfassen (S210) einer zweiten Ist-Temperatur der Innenspule und einer ersten Betriebsfrequenz des Kompressors;

gemäß der zweiten Ist-Temperatur und dem vorbestimmten Korrekturwert einer abnehmenden Amplitude, Erfassen (S220) einer zweiten Korrekturtemperatur;

Erfassen (S230) einer zweiten Temperaturdifferenz zwischen der zweiten Korrekturtemperatur und der vorherigen zweiten Korrekturtemperatur;

in dem Fall, dass die zweite Korrekturtemperatur höher als oder gleich einer zweite vorbestimmten Temperatur ist und die zweite Temperaturdifferenz größer als oder gleich der ersten Einstelltemperaturdifferenz ist und kleiner als oder gleich einer zweiten Einstelltemperaturdifferenz ist, Steuern (S240) des Kompressors, so dass dieser mit der ersten Betriebsfrequenz als eine konstante Betriebsfrequenz arbeitet;

in dem Fall, dass die zweite Korrekturtemperatur höher als eine dritte vorbestimmte Temperatur ist und die zweite Temperaturdifferenz größer als eine zweite vorbestimmte Temperaturdifferenz ist, Steuern des Kompressors, so dass dieser mit einer ersten Frequenzabnahmerate arbeitet; wobei die dritte vorbestimmte Temperatur größer als die zweite vorbestimmte Temperatur ist.

**3.** Steuerungsverfahren nach Anspruch 2, das nach dem Steuern des Kompressors, so dass dieser mit der ersten Frequenzanstiegsrate arbeitet, ferner umfasst:

Erfassen einer dritten Ist-Temperatur der Innenspule;

gemäß der dritten Ist-Temperatur und dem vorbestimmten Korrekturwert einer abnehmenden Amplitude, Erfassen einer dritten Korrekturtemperatur;

Erfassen einer dritten Temperaturdifferenz zwischen der dritten Korrekturtemperatur und der vorherigen dritten Korrekturtemperatur;

in dem Fall, dass die dritte Korrekturtemperatur höher als eine vierte vorbestimmten Temperatur ist und die dritte Temperaturdifferenz größer als die zweite vorbestimmte Temperaturdifferenz ist, Steuern des Kompressors, so dass dieser mit der zweiten Frequenzabnahmerate arbeitet; wobei die vierte vorbestimmte Temperatur größer als die dritte vorbestimmte Temperatur ist und die zweite Frequenzabnahmerate größer als die erste Frequenzabnahmerate ist.

**4.** Steuerungsverfahren nach Anspruch 1, das nach dem Steuern des Kompressors, so dass dieser mit der zweiten Frequenzanstiegsrate arbeitet, ferner umfasst:

Erfassen (S310) einer vierten Ist-Temperatur der Innenspule, einer aktuellen Raumtemperatur, und einer zweiten Betriebsfrequenz des Kompressors;

gemäß der vierten Ist-Temperatur und dem vorbestimmten Korrekturwert einer abnehmenden Amplitude, Erfassen (S320) einer vierten Korrekturtemperatur;

Erfassen (S330) einer höchsten Betriebsfrequenz des Kompressors entsprechend der aktuellen Raumtemperatur und einem aktuellen ersten Korrekturkoeffizienten, und Bestimmen einer Grenzfrequenz des Kompressors entsprechend der aktuellen Raumtemperatur gemäß einem Produkt aus der höchsten Betriebsfrequenz und dem aktuellen ersten Korrekturkoeffizienten;

in dem Fall, dass die vierte Korrekturtemperatur niedriger als eine erste Grenztemperatur eines konstanten Frequenztemperaturbereichs ist und die zweite Betriebsfrequenz größer als oder gleich der Grenzfrequenz ist, Steuern (S340) des Kompressors, so dass dieser mit der Grenzfrequenz als eine konstante Betriebsfrequenz arbeitet.

5. Steuerungsverfahren nach Anspruch 4, wobei das Erfassen der höchsten Betriebsfrequenz des Kompressors entsprechend der aktuellen Raumtemperatur umfasst:

nach dem Steuern des Kompressors, so dass dieser mit der zweiten Frequenzanstiegsrate für eine Einstelldauer arbeitet, Erfassen (S410) einer aktuellen vierten Temperaturdifferenz zwischen einer aktuellen vierten Korrekturtemperatur und der vorherigen vierten Korrekturtemperatur und eines Detektionsintervalls der Korrekturtemperatur der Innenspule;

gemäß der aktuellen vierten Temperaturdifferenz und dem Detektionsintervall, Bestimmen (S420) einer voraussichtlichen Temperaturanstiegsdauer, welche die aktuelle vierte Korrekturtemperatur erfordert, die zur unteren Grenztemperatur des konstanten Frequenztemperaturbereichs ansteigt;

gemäß der voraussichtlichen Temperaturanstiegsdauer und der zweiten Frequenzanstiegsrate des Kompressors, Bestimmen (S430) der höchsten Betriebsfrequenz des Kompressors entsprechend der aktuellen Raumtemperatur.

6. Steuerungsverfahren nach Anspruch 5, wobei gemäß der aktuellen vierten Temperaturdifferenz und dem Detektionsintervall das Bestimmen der voraussichtlichen Temperaturanstiegsdauer, welche die aktuelle vierte Korrekturtemperatur erfordert, die zur unteren Grenztemperatur des konstanten Frequenztemperaturbereichs ansteigt, umfasst:

gemäß einem Verhältnis der aktuellen vierten Temperaturdifferenz und dem Detektionsintervall, Bestimmen einer aktuellen Temperaturanstiegsrate;

gemäß einem Verhältnis einer erhöhten Temperatur der aktuellen vierten Korrekturtemperatur, die auf die untere Grenztemperatur des konstanten Frequenztemperaturbereichs ansteigt, und der aktuellen Temperaturanstiegsrate, Bestimmen der voraussichtlichen Temperaturanstiegsdauer;

Erfassen eines aktuellen zweiten Korrekturkoeffizienten entsprechend er aktuellen Raumtemperatur;

Erfassen eines Detektionsintervalls zwischen der aktuellen dritten Korrekturtemperatur und der vorherigen dritten Korrekturtemperatur;

Erfassen einer voraussichtlichen Detektionszeit gemäß dem Detektionsintervall und der voraussichtlochen Temperaturanstiegsdauer;

gemäß dem Detektionsintervall, dem zweiten Korrekturkoeffizienten, und der voraussichtlichen Detektionszeit, Erfassen der voraussichtlichen Temperaturanstiegsdauer.

7. Steuerungsverfahren nach Anspruch 1, das nach dem Steuern des Kompressors, so dass dieser mit der zweiten Frequenzanstiegsrate arbeitet, ferner umfasst:

Erfassen (S510) einer zweiten aktuellen Anstiegsfrequenzbetriebsdauer und einer dritten Betriebsfrequenz des Kompressors;

in dem Fall, dass die zweite aktuelle Anstiegsfrequenzbetriebsdauer größer als oder gleich einer zweiten Einstellanstiegsfrequenzbetriebsdauer ist, Steuern (S520) des Kompressors, so dass dieser mit der dritten Betriebsfrequenz als die konstante Betriebsfrequenz arbeitet.

8. Steuerungsverfahren nach einem der Ansprüche 1 bis 7, das ferner umfasst:

Erfassen einer ersten aktuellen Anstiegsfrequenzbetriebsdauer des Kompressors und einer aktuellen ersten Korrekturtemperatur' ;

in dem Fall, dass die erste aktuelle Anstiegsfrequenzbetriebsdauer länger als oder gleich der ersten Einstellanstiegsfrequenzbetriebsdauer ist und die aktuelle erste Korrekturtemperatur' niedriger als eine fünfte vorbestimmte Temperatur ist, Steuern des Kompressors, so dass dieser mit der zweiten Frequenzanstiegsrate arbeitet; wobei die fünfte vorbestimmte Temperatur höher als die erste vorbestimmte Temperatur ist.

9. Steuerungsverfahren für einen Kompressor einer Klimaanlage, der einen Prozessor und einen Speicher aufweist, auf dem Programmanweisungen gespeichert sind, wobei der Prozessor dazu ausgebildet ist, das Steuerungsverfahren für den Kompressor der Klimaanlage nach einem der Ansprüche 1 bis 8 bei Ausführung der Programmanweisungen auszuführen.

10. Klimaanlage, die aufweist:
eine Steuerungsvorrichtung für den Kompressor der Klimaanlage nach Anspruch 9.

**Revendications**

1. Procédé de commande d'un compresseur d'un conditionneur d'air, comprenant les étapes consistant à :

obtenir (S110) une première température courante d'un serpentin intérieur disposé dans le conditionneur d'air ;
conformément à la première température courante et à une valeur de correction d'amplitude de diminution prédéterminée, obtenir (S120) une première température de correction ;
dans un cas dans lequel la première température de correction est inférieure à une première température prédéterminée, commander (S130) le compresseur pour qu'il fonctionne à une première vitesse d'augmentation de fréquence ;
obtenir (S140) une première température courante du serpentin intérieur ;
conformément à la première température courante et à la valeur de correction d'amplitude de diminution prédéterminée, obtenir (S150) une première température de correction ;
dans un cas dans lequel la première température de correction est supérieure ou égale à la première température prédéterminée, obtenir une première différence de température entre la première température de correction et la première température de correction précédente ;
dans un cas dans lequel la première différence de température est supérieure ou égale à une première différence de température de réglage, commander (S160) le compresseur pour qu'il fonctionne à une seconde vitesse d'augmentation de fréquence, dans lequel la première vitesse d'augmentation de fréquence est supérieure à la seconde vitesse d'augmentation de fréquence.

2. Procédé de commande selon la revendication 1, dans lequel,
après une commande du compresseur pour qu'il fonctionne à la seconde vitesse d'augmentation de fréquence, le procédé comprend en outre les étapes consistant à :

obtenir (S210) une deuxième température courante du serpentin intérieur et une première fréquence de fonctionnement du compresseur ;
conformément à la deuxième température courante et à la valeur de correction d'amplitude de diminution prédéterminée, obtenir (S220) une deuxième température de correction ;
obtenir (S230) une deuxième différence de température entre la deuxième température de correction et la deuxième température de correction précédente ;
dans un cas dans lequel la deuxième température de correction est supérieure ou égale à une deuxième température prédéterminée, et dans lequel la deuxième différence de température est supérieure ou égale à la première différence de température de réglage et inférieure ou égale à une deuxième différence de température réglage, commander (S240) le compresseur pour qu'il fonctionne à la première fréquence de fonctionnement en tant que fréquence de fonctionnement constante ;
dans un cas dans lequel la deuxième température de correction est supérieure à une troisième température prédéterminée, et dans lequel la deuxième différence de température est supérieure à une deuxième différence de température prédéterminée, commander le compresseur pour qu'il fonctionne à une première vitesse de diminution de fréquence ; dans lequel la troisième température prédéterminée est supérieure à la deuxième température prédéterminée.

3. Procédé de commande selon la revendication 2, dans lequel,
après une commande du compresseur pour qu'il fonctionne à la première vitesse d'augmentation de fréquence, le procédé comprend en outre les étapes consistant à :

obtenir une troisième température courante du serpentin intérieur ;

conformément à la troisième température courante et à la valeur de correction d'amplitude de diminution prédéterminée, obtenir une troisième température de correction ;

obtenir une troisième différence de température entre la troisième température de correction et la troisième température de correction précédente ;

dans un cas dans lequel la troisième température de correction est supérieure à une quatrième température prédéterminée, et dans lequel la troisième différence de température est supérieure à la deuxième différence de température prédéterminée, commander le compresseur pour qu'il fonctionne à une seconde vitesse de diminution de fréquence ; dans lequel la quatrième température prédéterminée est supérieure à la troisième température prédéterminée, et la seconde vitesse de diminution de fréquence est supérieure à la première vitesse de diminution de fréquence.

4. Procédé de commande selon la revendication 1, dans lequel,
après une commande du compresseur pour qu'il fonctionne à la seconde vitesse d'augmentation de fréquence, le procédé comprend en outre les étapes consistant à :

obtenir (S310) une quatrième température courante du serpentin intérieur, une température ambiante intérieure courante, et une deuxième fréquence de fonctionnement du compresseur ;

conformément à la quatrième température courante et à la valeur de correction d'amplitude de diminution prédéterminée, obtenir (S320) une quatrième température de correction ;

obtenir (S330) une fréquence de fonctionnement la plus élevée du compresseur correspondant à la température ambiante intérieure courante, et un premier coefficient de correction courant, et déterminer une fréquence de limitation du compresseur correspondant à la température ambiante intérieure courante conformément à un produit de la fréquence de fonctionnement la plus élevée et du premier coefficient de correction courant ;

dans un cas dans lequel la quatrième température de correction est inférieure à une température de limitation basse d'une plage de température de fréquence constante, et dans lequel la deuxième fréquence de fonctionnement est supérieure ou égale à la fréquence de limitation, commander (S340) le compresseur pour qu'il fonctionne à la fréquence de limitation en tant que fréquence de fonctionnement constante.

5. Procédé de commande selon la revendication 4, dans lequel
l'étape d'obtention de la fréquence de fonctionnement la plus élevée du compresseur correspondant à la température ambiante intérieure courante comprend les étapes consistant à :

après une commande du compresseur pour qu'il fonctionne à la seconde vitesse d'augmentation de fréquence pendant une durée de réglage, obtenir (S410) une quatrième différence de température courante entre une quatrième température de correction courante et la quatrième température de correction précédente, et un intervalle de détection de la température de correction du serpentin intérieur ;

conformément à la quatrième différence de température courante et à l'intervalle de détection, déterminer (S420) une durée d'augmentation de température prédictive requise par la quatrième température de correction courante augmentant à la température de limitation basse de la plage de température de fréquence constante ;

conformément à la durée d'augmentation de température prédictive et à la seconde vitesse d'augmentation de fréquence du compresseur, déterminer (S430) la fréquence de fonctionnement la plus élevée du compresseur correspondant à la température ambiante intérieure courante.

6. Procédé de commande selon la revendication 5, dans lequel
conformément à la quatrième différence de température courante et à l'intervalle de détection, la détermination de la durée d'augmentation de température prédictive requise par la quatrième température de correction courante augmentant à la température de limitation basse de la plage de température de fréquence constante comprend les étapes consistant à :

conformément à un rapport de la quatrième différence de température courante et de l'intervalle de détection, déterminer une vitesse d'augmentation de température courante ;

conformément à un rapport d'une température augmentée de la quatrième température de correction courante augmentant à la température de limitation basse de la plage de température de fréquence constante et à la vitesse d'augmentation de température courante, déterminer la durée d'augmentation de température prédictive ;

obtenir un second coefficient de correction courant correspondant à la température ambiante intérieure courante ;

obtenir un intervalle de détection entre la troisième température de correction courante et la troisième température de correction précédente ;

obtenir un temps de détection prédictif conformément à l'intervalle de détection et à la durée d'augmentation de température prédictive ;
conformément à l'intervalle de détection, au second coefficient de correction et au temps de détection prédictif, obtenir la durée d'augmentation de température prédictive.

**7.** Procédé de commande selon la revendication 1, dans lequel
après une commande du compresseur pour qu'il fonctionne à la seconde vitesse d'augmentation de fréquence, le procédé comprend en outre les étapes consistant à :

obtenir (S510) une seconde durée de fonctionnement d'augmentation de fréquence courante et une troisième fréquence de fonctionnement du compresseur ;
dans un cas dans lequel la seconde durée de fonctionnement d'augmentation de fréquence courante est supérieure ou égale à une seconde durée de fonctionnement d'augmentation de fréquence de réglage, commander (S520) le compresseur pour qu'il fonctionne à la troisième fréquence de fonctionnement en tant que la fréquence de fonctionnement constante.

**8.** Procédé de commande selon l'une quelconque des revendications 1 à 7, comprenant en outre l'étape consistant à :

obtenir une première durée de fonctionnement d'augmentation de fréquence courante du compresseur et une première température de correction courante ;
dans un cas dans lequel la première durée de fonctionnement d'augmentation de fréquence courante est plus longue que la première durée de fonctionnement d'augmentation de fréquence de réglage, ou égale à cette dernière, et dans lequel la première température de correction courante est inférieure à une cinquième température prédéterminée, commander le compresseur pour qu'il fonctionne à la seconde vitesse d'augmentation de fréquence ; dans lequel la cinquième température prédéterminée est supérieure à la première température prédéterminée.

**9.** Dispositif de commande d'un compresseur d'un conditionneur d'air comprenant un processeur et une mémoire maintenant des instructions de programme, dans lequel
le processeur est configuré pour exécuter le procédé de commande du compresseur du conditionneur d'air selon l'une quelconque des revendications 1 à 8 lors de l'exécution des instructions de programme.

**10.** Conditionneur d'air, comprenant :
le dispositif de commande du compresseur du conditionneur d'air selon la revendication 9.

Obtaining a first actual temperature of the inner coil ⌇ S110

According to the first actual temperature and the predetermined decreasing amplitude correction value, obtaining a first correction temperature ⌇ S120

In a case where the first correction temperature is lower than the first predetermined temperature, controlling the compressor to operate at the first frequency increase rate ⌇ S130

Obtaining a first correction temperature` of the inner coil, and according to the first actual temperature` and the predetermined decreasing amplitude correction value, obtaining a first correction temperature` ⌇ S140

In a case where the first correction temperature` is greater than or equal to the first predetermined temperature, obtaining a first temperature difference between the first correction temperature` and the previous first correction temperature` ⌇ S150

In a case where the first temperature difference is greater than or equal to the first setting temperature difference, controlling the compressor to operate at a second frequency increase rate, wherein the first frequency increase rate is greater than the second frequency increase rate ⌇ S160

FIG. 1

Obtaining the second actual temperature of the inner coil and the first operating frequency of the compressor ⁓ S210

↓

According to the second actual temperature and the predetermined decreasing amplitude correction value, obtaining a second correction temperature ⁓ S220

↓

Obtaining a second temperature difference between the second correction temperature and the previous second correction temperature ⁓ S230

↓

In a case where the second correction temperature is greater than or equal to the second predetermined temperature, and the second temperature difference is greater than or equal to the first setting temperature difference and lower than or equal to the second setting temperature difference, controlling the compressor to operate at the first operating frequency as the constant operating frequency ⁓ S240

FIG. 2

Obtaining the fourth actual temperature of the inner coil, the current indoor ambient temperature and the second operating frequency of the compressor

S310

According to the fourth actual temperature and the predetermined decreasing amplitude correction value, obtaining a fourth correction temperature

S320

Obtaining the highest operating frequency of the compressor corresponding to the current indoor ambient temperature, and the current first correction coefficient, and determining the limiting frequency of the compressor corresponding to the current indoor ambient temperature according to the product of the highest operating frequency and the current first correction coefficient

S330

In a case where the fourth correction temperature is lower than the lower limiting temperature of the constant frequency temperature range, and the second operating frequency is greater than or equal to the limiting frequency, controlling the compressor to operate at the limiting frequency as the constant operating frequency

S340

## FIG. 3

After controlling the compressor to operate at the second frequency increase rate for the setting duration, in a case where the first correction temperature is greater than or equal to the second predetermined temperature, obtaining the current fourth temperature difference between the current fourth correction temperature and the previous fourth correction temperature, and the detection interval ⌇ S410

↓

According to the current fourth temperature difference and the detection interval, determining the predictive temperature increasing duration required by the current fourth correction temperature increasing to the lower limiting temperature of the constant frequency temperature range ⌇ S420

↓

According to the predictive temperature increasing duration and the second frequency increase rate of the compressor, determining the highest operating frequency of the compressor corresponding to the current indoor ambient temperature ⌇ S430

## FIG. 4

Obtaining the second current increasing frequency operation duration and the third operation frequency of the compressor ⌇ S510

↓

In a case where the second current increasing frequency operation duration is greater than or equal to the second setting increasing frequency operation duration, controlling the compressor to operate at the third operation frequency as the constant operating frequency ⌇ S520

## FIG. 5

FIG. 6

**EP 4 180 737 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111964234 A

- CN 111503841 A